# EUROPEAN PATENT SPECIFICATION

(11) **EP 4 324 592 B1**
(45) Date of publication and mention of the grant of the patent: **14.05.2025**
(21) Application number: 23189322.3
(22) Date of filing: 02.08.2023
(51) Int. Cl.: B23Q 7/00, B23Q 11/08

(54) **PROCESS FOR UNLOADING PROFILED BARS FROM, AND LOADING PROFILED BARS ON, A MACHINE TOOL, AND RELATED MACHINE TOOL**
VERFAHREN ZUM ENTLADEN VON PROFILSTÄBEN UND ZUM LADEN VON PROFILSTÄBEN AUF EINE WERKZEUGMASCHINE UND ZUGEHÖRIGE WERKZEUGMASCHINE
PROCÉDÉ POUR DÉCHARGER DES BARRES PROFILÉES D'UNE MACHINE-OUTIL ET MACHINE-OUTIL CORRESPONDANTE AINSI QUE POUR LES CHARGER

(30) Priority: 08.08.2022 IT 202200016947
(43) Date of publication of application: 21.02.2024
(73) Proprietor: elumatec AG, 75417 Mühlacker (DE)
(72) Inventor: BOK, Thomas, 72160 HORB DETTENSEE (DE)
(74) Representative: Colò, Chiara

(56) References cited:
- EP-A1- 1 479 477
- WO-A1-2014/177998
- WO-A1-2020/144597

## Description

The invention relates to a process for unloading profiled bars already machined from a machine tool and for loading profiled bars to be machined on a machine tool.

The invention furthermore relates to a machine tool for carrying out the above-mentioned process.

The process and the machine tool according to the invention may in particular operate with profiled bars intended to form door or window frames, which are made of metallic materials, for example aluminium, or synthetic polymeric materials, for example polyvinyl chloride (PVC) or composite materials.

To perform cutting, milling, drilling and other operations on the profiled bars, it is known to use machine tools, in particular machining centres, which may also have large dimensions, for example a length in the order of 8-9 metres, since these machine tools are intended to machine profiled bars with a length of even up to 6-7 metres. The profiled bars are machined in a working space of the machine tool. The working space can be closed using a safety door, movable between an open position, in which the operator can access the working space, and a closed position, in which the safety door prevents the operator from accessing the working space, so that the requested operations can be performed on the profiled bar under safe conditions. The safety door has a part made of transparent material, usually glass or transparent plastic material, to allow the operators to visually check what occurs on the machine tool even when the safety door is in the closed position.

In the working space of the machine tool, there is provided a supporting device for supporting the profiled bar during the machining operations. The supporting device comprises at least one pair of clamps configured to clamp the profiled bar during the machining operations, so as to keep the profiled bar stationary in the correct position.

When the machining of a profiled bar has been completed on the prior art machine tools, the machine stops and the safety door opens to allow the operator to access inside the machine tool. The operator takes the profiled bar already machined and extracts it from the machine tool, after which the safety door is closed to allow the clamps to return automatically to a receiving configuration, in which the clamps are ready to receive a new profiled bar to be machined. The operation of automatically positioning the clamps in the receiving configuration is considered a dangerous operation and as such has to be performed while the safety door is closed.

After the clamps have been repositioned in the receiving configuration, the safety door opens and the operator loads a profiled bar to be machined on the machine tool. At this point, the safety door is again closed and the desired machining operation is performed on the profiled bar.

A drawback in machine tools which operate as mentioned above is that each time it is necessary to unload an already machined profiled bar from the machine tool and load a profiled bar to be machined on machine tool, the safety door opens and closes twice.

This results in an increase in the cycle time, that is to say, the duration of the machining cycle of a profiled bar on the machine tool, including the time necessary for unloading an already machined profiled bar from the machine tool and loading a profiled bar to be machined on the machine tool. Moreover, since the safety door needs to be opened and closed many times, the mechanical devices designed to open and close the safety door are stressed in a significant manner. It should be noted that, given the usual dimensions of the machine tool, the safety door often has a length of several metres and a great weight, so that each opening or closing operation results in high stresses on the mechanical devices which operate the safety door.

A machine tool for working workpieces of known type is disclosed in WO 2014/177998. This machine tool has a working space and performs a process comprising the steps of:
- machining a profiled bar on the machine tool in an operating position inside the working space,
- unloading the machined profiled bar from the machine tool, wherein before unloading the machined profiled bar, there is provided a step of moving the machined profiled bar to a standby position distinct from the operating position, the standby position being defined inside the working space.

An object of the invention is to improve the processes and apparatuses for unloading machined profiled bars from a machine tool and for loading profiled bars to be machined on the machine tool.

A further object is to reduce the time necessary for unloading a profiled bar from a machine tool, after the machine tool has performed one or more required operations on the profiled bar, and loading a new profiled bar on the machine tool.

Another object is to reduce the cycle time, that is to say, the duration of the machining cycle of a profiled bar on the machine tool.

Still another object is to reduce the stresses on the mechanical devices intended to open and/or close a safety door of a machine tool for machining profiled bars.

In a first aspect of the invention, there is provided a process as defined in claim 1.

Owing to this aspect of the invention, it is possible to free the operating position before opening the safety door, so that in the working space, which is still closed by the safety door, accessory activities can be performed which need to be carried out in safe conditions. This makes it possible to reduce the number of times the safety door must be opened and subsequently closed again, since the accessory activities can be performed in the operating position while the profiled bar is in the standby position, that is to say, it is still inside the working space, without opening in advance the safety door to extract the machined profiled bar.

The machined profiled bar can be extracted from the machine tool after the accessory activities have been completed, while a new profiled bar to be machined is loaded on the machine tool.

In this way, it is sufficient to open and close the safety door only once, when it is required to unload an already machined profiled bar from the machine tool and load a profiled bar to be machined on the machine tool.

This makes it possible to reduce the cycle time and consequently increase the productivity of the machine tool.

Moreover, by reducing the number of times the safety door is opened and closed, it is possible to reduce the stresses on the mechanical devices intended to move the safety door to move it from an open configuration to a closed configuration, or vice versa.

In an embodiment, the profiled bar is locked by at least two locking clamps during the machining step.

In an embodiment, while the machined profiled bar is located in the standby position, in the operating position there is provided a step of positioning the locking clamps in a receiving configuration in which the locking clamps are ready to receive a profiled bar to be machined.

The step of positioning the locking clamps in the receiving configuration may thus occur under safe conditions, that is to say, when the safety door is still closed, without having to first extract the machined bar from the machine tool.

In an embodiment, the step of opening the safety door is provided while the machined profiled bar is in the standby position.

In particular, the safety door may be opened after, in the operating position, which has been freed from the machined profiled bar, any accessory activities have been performed, for example positioning of the locking clamps in the receiving configuration.

In an embodiment, after the safety door has been opened, there is provided the step of loading a profiled bar to be machined in the operating position.

The step of loading a profiled bar to be machined in the operating position may optionally occur whilst the machined profiled bar is still in the standby position.

In an embodiment, the standby position is interposed between the operating position and the safety door.

In an embodiment, the standby position is arranged at a lower level than the operating position.

This avoids interference between the machined profiled bar and the profiled bar to be machined, if the profiled bar to be machined is loaded in the operating position whilst the machined profiled bar is still in the standby position.

In a second aspect of the invention, there is provided a machine tool as defined in claim 9.

Owing to the second aspect of the invention, it is possible to avoid opening the safety door to extract the machined profiled bar, if accessory operations have to be performed before loading a new profiled bar to be machined. The accessory operations can be performed while the already machined profiled bar is in the standby position. This makes it possible to minimise the number of openings and closings of the safety door, with a consequent reduction in the cycle time and reduction of the stresses acting on the mechanical devices which open and close the safety door.

The machine tool comprises a movement device configured for moving a machined profiled bar from the operating position to the standby position whilst the safety door is closed.

The profiled bar can thus be brought to the standby position in a fast and fully automated manner, without requiring the intervention of the operator.

The movement device comprises a lifting element configured for lifting the machined profiled bar from the operating position, positioning the machined profiled bar at one side of the operating position, and supporting the machined profiled bar in the standby position.

The lifting element allows the machined profiled bar to be transported to the standby position quickly and easily.

In an embodiment, after positioning the machined profiled bar at a side of the operating position, the lifting device lowers to reach the standby position. The invention can be better understood and implemented with reference to the accompanying drawings which illustrate a non-limiting exemplary embodiment thereof and in which:
Figure 1 is a schematic cross section showing a profiled bar in an operating position on a machine tool;
Figure 2 is a view like that of Figure 1, showing a movement device which moves towards the machined profiled bar;
Figure 3 is a view like that of Figure 1, showing the movement device which lifts the machined profiled bar from the operating position;
Figure 4 is a view like that of Figure 1, showing the movement device which moves the machined profiled bar at a side of the operating position;
Figure 5 is a view like that of Figure 1, showing the movement device which lowers the machined profiled bar, positioning it in a standby position;
Figure 6 is a view like that of Figure 1, showing a safety door of the machine tool which opens;
Figure 7 is a view like that of Figure 1, showing a profiled bar to be machined which is loaded into the operating position;
Figure 8 is a view like that of Figure 1, showing the machined profiled bar which is unloaded from the standby position;
Figure 9 is a view like that of Figure 1, showing the safety door which closes so that the profiled bar to be machined can start to be machined.

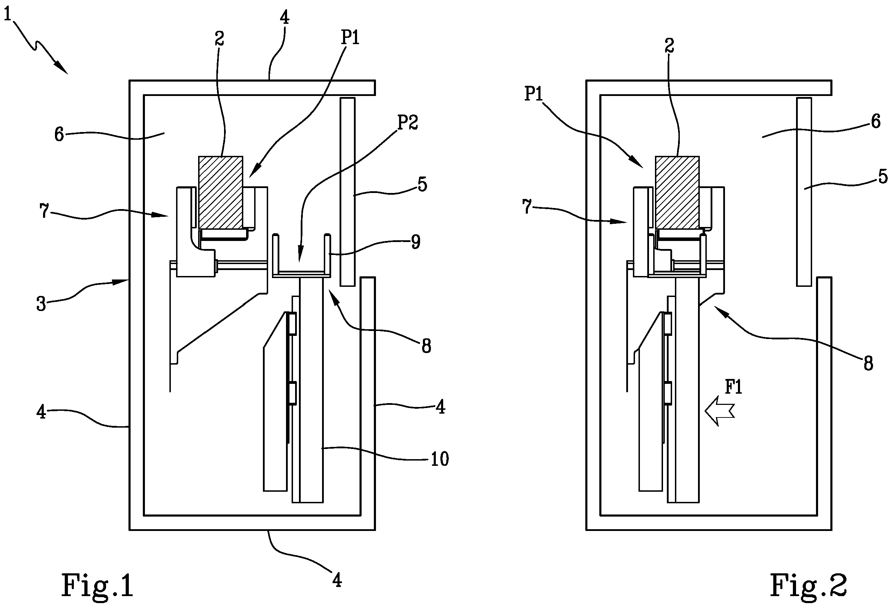

Figure 1 is a schematic cross section of a portion of a machine tool 1, for example a numerical control machine tool (CNC) or a machining centre.

The machine tool 1 is suitable for performing mechanical operations on profiled bars 2, for example intended to be used for producing door and window frames. In the drawings, the cross section of the profiled bars 2 is indicated generically as a rectangular cross section, but it is understood that the machine tool 1 is able to perform machining operations on profiled bars 2 having a transversal cross section of any geometrical shape.

The machine tool 1 can perform milling, drilling, cutting or other operations on the profiled bars 2.

The profiled bars 2 may be made of metallic material, for example aluminium, or of polymeric material, for example PVC, or of composite material or the like.

The profiled bars 2 may have different lengths and may be up to 6-7 metres long. Consequently, the machine tool 1 has a length, in a direction perpendicular to the plane of the drawings, such as to house the profiled bars 2 to be machined, that is to say, even of 8-9 metres.

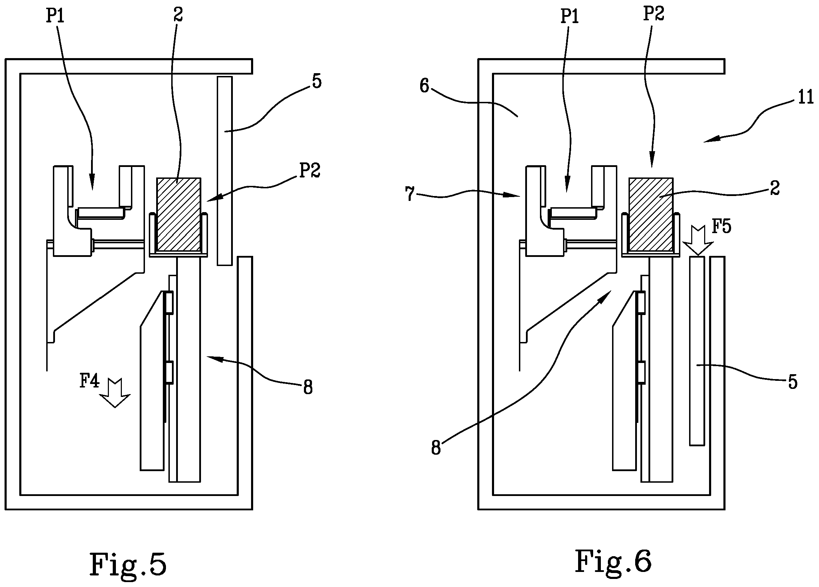

The machine tool 1 has a cabin 3, shown schematically in Figure 1, which has a plurality of walls 4. A safety door 5 is also provided, the safety door 5 being movable between a closed configuration, shown in Figure 1, and an open configuration, shown in Figure 6. In the example shown, the safety door 5 passes from the closed configuration to the open configuration, and vice versa, by means of a translation movement, that is to say, a linear movement, along a vertical direction. According to an alternative embodiment, the safety door 5 may pass from the closed configuration to the open configuration, or vice versa, by means of a rotational movement, or by a movement given by the combination of a rotational movement and a translational movement, or by a translational movement in a non-vertical direction, or other.

A working space 6 is defined inside the machine tool 1. In the working space 6, the profiled bar 2 is received during the machining operations. The working space 6 is, in particular, defined inside the cabin 3.

When the safety door 5 is in the open configuration, the operator can access the working space 6, for example for loading on the machine tool 1 a profiled bar 2 to be machined, unloading from the machine tool 1 a profiled bar 2 already machined, carrying out maintenance, cleaning or repair operations, and the like. In the closed configuration, the safety door 5 closes the working space 6, preventing the operator from introducing, even accidentally, his/her hands or various objects inside the working space 6. The working operations on the profiled bars 2, and in general all the operations which involve risks for the operator, are performed whilst the safety door 5 is arranged in the closed configuration.

In the working space 6 there are supporting elements for supporting the profiled bar 2 during the machining. The supporting elements may comprise at least one pair of locking clamps 7, only one of which is shown in Figure 1. Each locking clamp 7 comprises a pair of gripping elements, movable relative to each other for clamping the profiled bar 2 and holding it in a fixed position during the machining.

The supporting elements may further comprise one or more intermediate supports interposed between the locking clamps 7, and/or one or more end supports positioned close to end zones of the profiled bar 2, for receiving and supporting the profiled bar 2.

The locking clamps 7 may be positioned at different points along the profiled bar 2, depending on the geometrical and dimensional features of the profiled bar 2 to be machined and depending on the position and the type of machining required.

The machine tool 1 further comprises a working head, not illustrated in the drawings, on which one or more tools are mounted. The working head is movable in the working space 6 for performing the required working operations on the profiled bar 2.

Inside the working space 6 an operating position P1 is defined, in which the profiled bar 2 can be subjected to one or more mechanical machining operations by the working head. More specifically, in the operating position P1 the profiled bar 2 is supported by the locking clamps 7 and by the other supporting elements if necessary.

Inside the working space 6 a standby position P2 is further defined, in which the profiled bar 2 may be temporarily positioned while waiting for subsequent operations.

The standby position P2 may be located substantially at a side of the operating position P1.

The standby position P2 may be interposed between the operating position P1 and the safety door 5.

According to the example shown, the standby position P2 is arranged at a lower height than the operating position P1. However, this condition is not necessary, and the standby position P2 could also be arranged at the same level as the operating position P1, or at a level slightly higher than the operating position P1.

The machine tool 1 further comprises a movement device 8 for moving a profiled bar 2, which has already been machined, from the operating position P1 to the standby position P2. The movement device 8 may comprise at least one lifting element 9 suitable for engaging below the machined profiled bar 2 for moving the profiled bar 2 away from the operating position P1 and bringing it to the standby position P2. The lifting element 9, which may be substantially U-shaped, is fixed to a rod 10.

Obviously, there may be several lifting elements 9, configured to engage with the profiled bar 2 in different positions along a longitudinal dimension of the profiled bar 2.

The movement device 8 may be movable in a horizontal direction, for moving towards the operating position P1 or alternatively moving away from the operating position P1. The movement device 8 may also be movable in a vertical direction, for engaging with the profiled bar 2 and disengaging the profiled bar 2 from the locking clamps 7.

Figure 1 shows the cabin 3 of the machine tool 1 after the machining operations have been completed on a profiled bar 2. The latter is in the operating position P1, supported by the locking clamps 7 and any other supporting elements. The safety door 5 is in the closed configuration and isolates the working space 6 from the outside environment, that is to say, it closes the working space 6. The movement device 8 is located in the standby position P2. There are no profiled bars 2 in the standby position P2, that is to say, the movement device 8 does not support any profiled bar 2 in this step.

At this point, the movement device 8 moves towards the operating position P1 for picking up the profiled bar 2 already machined from the operating position P1 and moving it to the standby position P2.

For this purpose, the movement device 8 can move horizontally from the standby position P2 towards the operating position P1, moving away from the safety door 5, as shown by the arrow F1 in Figure 2. The movement device 8 is thus positioned below the profiled bar 2 already machined, still arranged in the operating position P1, as shown in Figure 2.

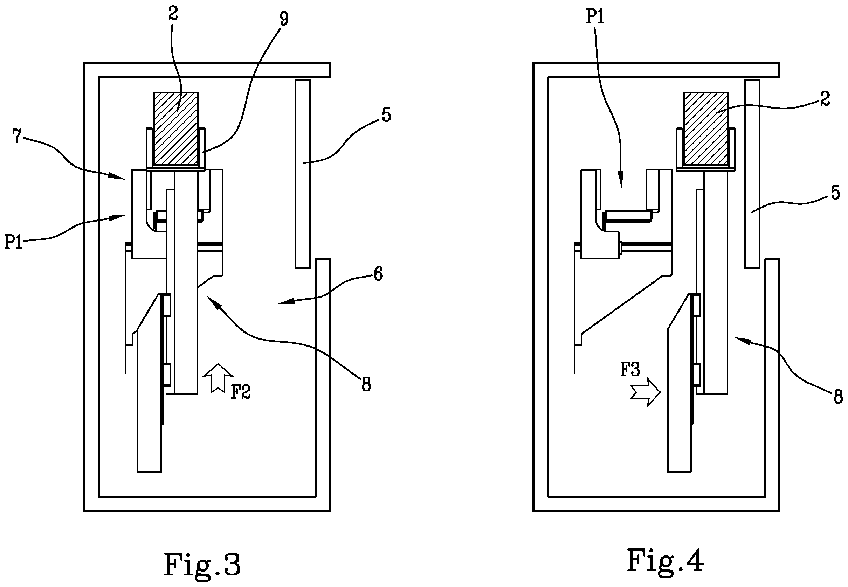

The movement device 8 is now moved upwards, as shown by the arrow F2 in Figure 3, so as to come into contact with the profiled bar 2. In this way, the lifting element 9 restingly receives the profiled bar 2 already machined and lifts it, thereby moving it away from the locking clamps 7.

In order to allow the movement device 8 to move the profiled bar 2 away from the operating position P1, the locking clamps 7 have been opened beforehand, in such a way as to free the profiled bar 2. Moreover, the movement device 8 has been previously positioned along the profiled bar 2 at a portion of the profiled bar 2 on which the locking clamps 7 do not act. When the movement device 8 moves upwards, the profiled bar 2, after resting on the lifting element 9, is disengaged completely from the locking clamps 7 and moves outside the overall dimensions of the latter.

It is now possible to move the movement device 8 towards the safety door 5, as indicated by the arrow F3 in Figure 4. The movement device 8 is thus moved at a side of the operating position P1. The safety door 5 is still closed. The operating position P1 is empty. The movement device 8 is still in a raised configuration, at a higher level than the operating position P1. Subsequently, as shown in Figure 5, the movement device 8 which supports the machined profiled bar 2 is moved to the standby position P2. This occurs by moving the movement device 8 downwards, as indicated by the arrow F4. The profiled bar 2 may in this way be moved to a height lower than the height at which the profiled bar 2 was when it was engaged with the locking clamps 7 in the operating position P1, even if this condition is not necessary. The safety door 5 is still in the closed configuration.

While the machined profiled bar 2 is moved to the standby position P2, or after the machined profiled bar 2 has been moved to the standby position P2, that is to say, while the machine tool 1 is, for example, in the condition shown in Figure 4 or in Figure 5, it is possible to perform accessory activities in the operating position P1. These accessory activities may comprise operations which are potentially dangerous for the operator, which should be performed while the safety door 5 is closed.

In particular, in the operating position 1 the locking clamps 7 can be positioned automatically in a receiving configuration in which the locking clamps 7 are ready to receive the next profiled bar 2 to be machined. In the receiving configuration, the locking clamps 7 are in a position which depends on the geometrical and dimensional features of the subsequent bar 2 to be machined, as well as on the type and position of the machining operations which have to be performed on the profiled bar 2.

The position of the locking clamps 7 in the receiving configuration can therefore vary between one profiled bar 2 and the next.

The locking clamps 7 are brought to the correct receiving configuration owing to a control unit which controls the operation of the machine tool 1. The control unit is able to determine the position of the locking clamps 7 on the basis of the type of profiled bar 2 and the type of machining operation to be performed. The information on the type of profiled bar 2 and on the type of machining operation to be performed is supplied to the control unit before loading the profiled bar 2 to be machined on the machine tool, for example by reading a code, such as a bar code or a QR code, applied to the profiled bar 2 to be machined.

After the machined profiled bar 2 has been moved to the standby position P2 and after the accessory activities (for example, automatically positioning the locking clamps 7 in the receiving configuration ready to receive the next bar 2 to be machined) have been completed, the safety door 5 is opened, that is to say, it is moved to the open position shown in Figure 6. According to the example shown, this may be performed by moving the safety door 5 downwards, as shown by the arrow F5 in Figure 6.

The working space 6 is thus opened, that is to say, placed in communication with the outside environment through a passage 11, made available by moving the safety door 5 to the open configuration.

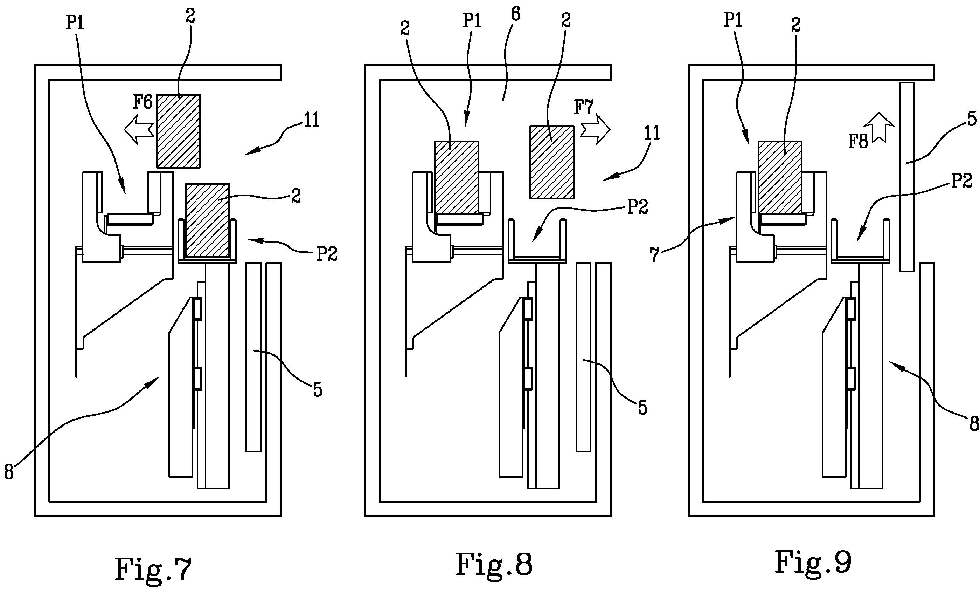

Through the passage 11, the operator can now introduce the subsequent profiled bar 2 to be machined in the working space 6, as indicated by the arrow F6 in Figure 7. In particular, the profiled bar 2 to be machined is moved to the operating position P1 by moving it above the profiled bar 2 which has already been machined and is positioned in the standby position P2.

The profiled bar 2 to be machined is rested on the locking clamps 7 and/or on the other supporting elements designed to support the profiled bar 2 during the machining.

After positioning the profiled bar 2 to be machined in the operating position P1, it is possible to extract the profiled bar 2 already machined from the machine tool 1. The profiled bar 2 already machined is thus moved outside the working space 6, through the passage 11, as shown by the arrow F7 in Figure 8. The standby position P2 is thus emptied.

According to an alternative embodiment not illustrated, the profiled bar 2 already machined could be picked up from the standby position P2 and removed from the machine tool 1 before positioning the new profiled bar 2 to be machined in the operating position P1. It is therefore possible to reverse the order of the steps shown in Figures 7 and 8.

After having extracted the profiled bar 2 already machined from the working space 6, the safety door 5 is moved to the closed configuration, as indicated by the arrow F8 in Figure 9. Inside the machine tool 1, a closed working space 6 is thus defined. The locking clamps 7 clamp the profiled bar 2 with a high pressure and the working head may start to work. The safety door 5 is closed and the standby position P2 is empty, ready to receive the profiled bar 2 being processed as soon as the required machining operations are completed.

The example shown shows a specific movement device 8, which moves following a certain sequence of steps. However, it is also possible to use movement devices of a different type, having a structure different from the movement device 8 shown and/or movable through a sequence of steps different from that shown.

In any case, two positions are provided inside the working space 6 which a profiled bar 2 can selectively occupy, that is to say, the operating position P1, in which the profiled bar 2 is machined by the working head, and the standby position P2, in which the profiled bar 2 is momentarily positioned, after being machined. This makes it possible to disengage the profiled bar 2 already machined from the locking clamps 7, to allow the latter to reposition automatically in the receiving configuration, but without, however, opening the safety door 5 for extracting the profiled bar 2 already machined. While the locking clamps 7 are repositioned into the receiving configuration ready to receive a new profiled bar 2 to be machined, the profiled bar 2 already machined is temporarily moved to the standby position P2, inside the working space 6 closed by the safety door 5, that is to say, inside a protected space.

## Claims

1. A process comprising the steps of:
- providing a machine tool (1) in which a working space (6) is defined, the machine tool (1) comprising a safety door (5) for closing the working space (6) or alternatively allowing access to the working space (6);
- machining a profiled bar (2) on the machine tool (1) in an operating position (P1) inside the working space (6), the working space (6) being closed by the safety door (5);
- opening the safety door (5) after the profiled bar (2) has been machined, for unloading the machined profiled bar (2) from the machine tool (1),
wherein, before opening the safety door (5), there is provided a step of moving the machined profiled bar (2) to a standby position (P2) distinct from the operating position (P1), the standby position (P2) being defined inside the working space (6), and wherein, after the step of opening the safety door (5), there is provided a step of loading a profiled bar (2) to be machined in the operating position (P1).

2. The method according to claim 1, wherein the step of opening the safety door (5) is carried out after accessory activities have been performed in the operating position (P1), from which the machined profiled bar (2) has been removed.

3. The process according to claim 1 or 2, wherein the profiled bar (2) is locked by at least two locking clamps (7) during the machining step, and wherein, while the machined profiled bar (2) is arranged in the standby position (P2), a step of positioning the locking clamps (7) is carried out in the operating position (P1) for positioning the locking clamps (7) in a receiving configuration, the locking clamps (7) being ready to receive a profiled bar (2) to be machined in the receiving configuration.

4. The process according to any preceding claim, wherein the step of opening the safety door (5) is carried out while the machined profiled bar (2) is in the standby position (P2).

5. The process according to any preceding claim, wherein the step of loading a profiled bar (2) to be machined in the operating position (P1) is carried out while the machined profiled bar (2) is in the standby position (P2).

6. The process according to any preceding claim, wherein the step of loading a profiled bar (2) to be machined in the operating position (P1) occurs by passing the profiled bar (2) to be machined above the machined profiled bar (2) which is located in the standby position (P2).

7. The process according to any preceding claim, wherein the machined profiled bar (2) is supported in the standby position (P2) by a movement device (8) which has moved the machined profiled bar (2) from the operating position (P1) to the standby position (P2).

8. The process according to any preceding claim, wherein the standby position (P2) is interposed between the operating position (P1) and the safety door (5).

9. A machine tool having a working space (6), the machine tool (1) comprising a safety door (5) for closing the working space (6) or alternatively allowing access to the working space (6), wherein inside the working space (6) an operating position (P1) is defined for receiving a profiled bar (2) while the profiled bar (2) is machined, and wherein inside the working space (6) a standby position (P2) is furthermore defined for receiving a machined profiled bar (2) while accessory activities are performed in the operating position (P1), the machine tool further comprising a movement device (8) configured for moving a machined profiled bar (2) from the operating position (P1) to the standby position (P2) while the safety door (5) is closed, and wherein the movement device (8) comprises a lifting element (9) configured for lifting the machined profiled bar (2) from the operating position (P1), positioning the machined profiled bar (2) in the standby position (P2), and supporting the machined profiled bar (2) in the standby position (P2).

10. The machine tool according to claim 9, wherein the standby position (P2) is interposed between the operating position (P1) and the safety door (5).

11. The machine tool according to claim 9 or 10, wherein the standby position (P2) is arranged at a lower level than the operating position (P1).

## Patentansprüche

1. Verfahren, umfassend die folgenden Schritte:
- Bereitstellen einer Werkzeugmaschine (1), in der ein Arbeitsbereich (6) definiert ist, wobei die Werkzeugmaschine (1) eine Sicherheitstür (5) zum Schließen des Arbeitsbereichs (6) oder alternativ zum Erlauben des Zugriffs auf den Arbeitsbereich (6) umfasst;
- Bearbeiten eines Profilstabs (2) auf der Werkzeugmaschine (1) in einer Betriebsposition (P1) innerhalb des Arbeitsbereichs (6), wobei der Arbeitsbereich (6) durch die Sicherheitstür (5) verschlossen ist;
- Öffnen der Sicherheitstür (5), nachdem der Profilstab (2) bearbeitet wurde, um den Profilstab (2) aus der Werkzeugmaschine (1) zu entladen,
wobei vor dem Öffnen der Sicherheitstür (5) ein Schritt zum Bewegen des bearbeiteten Profilstabs (2) in eine Ruheposition (P2) vorgesehen ist, die sich von der Betriebsposition (P1) unterscheidet, wobei die Ruheposition (P2) innerhalb des Arbeitsbereichs (6) definiert ist und wobei nach dem Schritt zum Öffnen der Sicherheitstür (5) ein Schritt zum Laden eines zu bearbeitenden Profilstabs (2) in die Betriebsposition (P1) vorgesehen ist.

2. Verfahren nach Anspruch 1, wobei der Schritt zum Öffnen der Sicherheitstür (5) durchgeführt wird, nachdem Nebentätigkeiten in der Betriebsposition (P1), aus der der bearbeitete Profilstab (2) entfernt wurde, ausgeführt wurden.

3. Verfahren nach Anspruch 1 oder 2, wobei der Profilstab (2) durch mindestens zwei Spanneinrichtungen (7) während des Bearbeitungsschritts eingespannt ist, und wobei ein Schritt zum Positionieren der Spanneinrichtungen (7) in der Betriebsposition (P1) durchgeführt wird, um die Spanneinrichtungen (7) in einer Aufnahmeauslegung zu positionieren, während der bearbeitete Profilstab (2) in der Ruheposition (P2) angeordnet ist, wobei die Spanneinrichtungen (7) bereit sind, um einen zu bearbeitenden Profilstab (2) in der Aufnahmeauslegung aufzunehmen.

4. Verfahren nach einem der vorhergehenden Ansprüche, wobei der Schritt zum Öffnen der Sicherheitstür (5) durchgeführt wird, während sich der bearbeitete Profilstab (2) in der Ruheposition (P2) befindet.

5. Verfahren nach einem der vorhergehenden Ansprüche, wobei der Schritt zum Laden eines zu bearbeitenden Profilstabs (2) in die Betriebsposition (P1) durchgeführt wird, während sich der bearbeitete Profilstab (2) in der Ruheposition (P2) befindet.

6. Verfahren nach einem der vorhergehenden Ansprüche, wobei der Schritt zum Laden eines zu bearbeitenden Profilstabs (2) in die Betriebsposition (P1) erfolgt, indem der zu bearbeitende Profilstab (2) über den bearbeiteten Profilstab (2), der in der Ruheposition (P2) befindlich ist, geführt wird.

7. Verfahren nach einem der vorhergehenden Ansprüche, wobei der bearbeitete Profilstab (2) in der Ruheposition (P2) von einer Bewegungsvorrichtung (8) gestützt wird, die den bearbeiteten Profilstab (2) von der Betriebsposition (P1) in die Ruheposition (P2) bewegt hat.

8. Verfahren nach einem der vorhergehenden Ansprüche, wobei die Ruheposition (P2) zwischen der Betriebsposition (P1) und der Sicherheitstür (5) eingefügt ist.

9. Werkzeugmaschine, aufweisend einen Arbeitsbereich (6), wobei die Werkzeugmaschine (1) eine Sicherheitstür (5) zum Schließen des Arbeitsbereichs (6) oder alternativ zum Erlauben des Zugriffs auf den Arbeitsbereich (6) umfasst, wobei innerhalb des Arbeitsbereichs (6) eine Betriebsposition (P1) zur Aufnahme eines Profilstabs (2) definiert ist, während der Profilstab (2) bearbeitet wird, und wobei innerhalb des Arbeitsbereichs (6) zudem eine Ruheposition (P2) definiert ist, um einen bearbeiteten Profilstab (2) aufzunehmen, während Nebentätigkeiten in der Betriebsposition (P1) durchgeführt werden, wobei die Werkzeugmaschine zudem eine Bewegungsvorrichtung (8) umfasst, die ausgelegt ist, um einen bearbeiteten Profilstab (2) von der Betriebsposition (P1) in die Ruheposition (P2) zu bewegen, während die Sicherheitstür (5) geschlossen ist, und wobei die Bewegungsvorrichtung (8) ein Hebeelement (9) umfasst, das ausgelegt ist, um den bearbeiteten Profilstab (2) aus der Betriebsposition (P1) zu heben und den bearbeiteten Profilstab (2) in der Ruheposition (P2) zu positionieren und den bearbeiteten Profilstab (2) in der Ruheposition (P2) zu stützen.

10. Werkzeugmaschine nach Anspruch 9, wobei die Ruheposition (P2) zwischen der Betriebsposition (P1) und der Sicherheitstür (5) eingefügt ist.

11. Werkzeugmaschine nach Anspruch 9 oder 10, wobei die Ruheposition (P2) auf einer niedrigeren Ebene als die Betriebsposition (P1) angeordnet ist.

## Revendications

1. Procédé comprenant les étapes de :
- fournir une machine-outil (1) dans laquelle un espace de travail (6) est défini, la machine-outil (1) comprenant une porte de sécurité (5) pour fermer l'espace de travail (6) ou alternativement permettre l'accès à l'espace de travail (6) ;
- usiner une barre profilée (2) sur la machine-outil (1) dans une position de fonctionnement (P1) à l'intérieur de l'espace de travail (6), l'espace de travail (6) étant fermé par la porte de sécurité (5) ;
- ouvrir la porte de sécurité (5) après que la barre profilée (2) a été usinée, pour décharger la barre profilée usinée (2) de la machine-outil (1),
dans lequel, avant d'ouvrir la porte de sécurité (5), il est prévu une étape consistant à déplacer la barre profilée usinée (2) vers une position d'attente (P2) distincte de la position de fonctionnement (P1), la position d'attente (P2) étant définie à l'intérieur de l'espace de travail (6), et dans lequel, après l'étape consistant à ouvrir la porte de sécurité (5), il est prévu une étape consistant à charger une barre profilée (2) à usiner dans la position de fonctionnement (P1).

2. Procédé selon la revendication 1, dans lequel l'étape consistant à ouvrir la porte de sécurité (5) est effectuée après que des activités accessoires ont été effectuées dans la position de fonctionnement (P1), à partir de laquelle la barre profilée usinée (2) a été retirée.

3. Procédé selon la revendication 1 ou 2, dans lequel la barre profilée (2) est verrouillée par au moins deux pinces de verrouillage (7) pendant l'étape d'usinage, et dans lequel, alors que la barre profilée usinée (2) est agencée dans la position d'attente (P2), une étape consistant à positionner les pinces de verrouillage (7) est effectuée dans la position de fonctionnement (P1) pour positionner les pinces de verrouillage (7) dans une configuration de réception, les pinces de verrouillage (7) étant prêtes à recevoir une barre profilée (2) à usiner dans la configuration de réception.

4. Procédé selon l'une quelconque des revendications précédentes, dans lequel l'étape consistant à ouvrir la porte de sécurité (5) est effectuée alors que la barre profilée usinée (2) est dans la position d'attente (P2).

5. Procédé selon l'une quelconque des revendications précédentes, dans lequel l'étape consistant à charger une barre profilée (2) à usiner dans la position de fonctionnement (P1) est effectuée alors que la barre profilée usinée (2) est dans la position d'attente (P2).

6. Procédé selon l'une quelconque des revendications précédentes, dans lequel l'étape consistant à charger une barre profilée (2) à usiner dans la position de fonctionnement (P1) se produit en passant la barre profilée (2) à usiner au-dessus de la barre profilée usinée (2) qui est située dans la position d'attente (P2).

7. Procédé selon l'une quelconque des revendications précédentes, dans lequel la barre profilée usinée (2) est supportée dans la position d'attente (P2) par un dispositif de déplacement (8) qui a déplacé la barre profilée usinée (2) de la position de fonctionnement (P1) à la position d'attente (P2).

8. Procédé selon l'une quelconque des revendications précédentes, dans lequel la position d'attente (P2) est interposée entre la position de fonctionnement (P1) et la porte de sécurité (5).

9. Machine-outil ayant un espace de travail (6), la machine-outil (1) comprenant une porte de sécurité (5) pour fermer l'espace de travail (6) ou alternativement pour permettre l'accès à l'espace de travail (6), dans laquelle à l'intérieur de l'espace de travail (6) une position de fonctionnement (P1) est définie pour recevoir une barre profilée (2) tandis que la barre profilée (2) est usinée, et dans laquelle à l'intérieur de l'espace de travail (6) une position d'attente (P2) est en outre définie pour recevoir une barre profilée usinée (2) tandis que des activités accessoires sont effectuées dans la position de fonctionnement (P1), la machine-outil comprenant en outre un dispositif de déplacement (8) configuré pour déplacer une barre profilée usinée (2) de la position de fonctionnement (P1) à la position d'attente (P2) tandis que la porte de sécurité (5) est fermée, et dans laquelle le dispositif de déplacement (8) comprend un élément de levage (9) configuré pour soulever la barre profilée usinée (2) de la position de fonctionnement (P1), pour positionner la barre profilée usinée (2) dans la position d'attente (P2), et pour supporter la barre profilée usinée (2) dans la position d'attente (P2).

10. Machine-outil selon la revendication 9, dans laquelle la position d'attente (P2) est interposée entre la position de fonctionnement (P1) et la porte de sécurité (5).

11. Machine-outil selon la revendication 9 ou 10, dans laquelle la position d'attente (P2) est agencée à un niveau inférieur à la position de fonctionnement (P1).
